# EUROPEAN PATENT SPECIFICATION

(11) **EP 2 014 605 B1**
(45) Date of publication and mention of the grant of the patent: **29.08.2012**
(21) Application number: 07112088.5
(22) Date of filing: 09.07.2007
(51) Int. Cl.: B66F 9/075, B62B 3/06, B62D 51/02

(54) **Load lifting device and a platform for a load lifting device**
Lastenhebevorrichtung und Plattform für eine Lastenhebevorrichtung
Dispositif monte-charge et plate-forme pour dispositif monte-charge

(43) Date of publication of application: 14.01.2009
(73) Proprietor: BT Products AB, 595 81 Mjölby (SE)
(72) Inventor: Larsson, Sofia, 590 76 Vreta Kloster (SE); Carlson, Magnus, 590 47 Vikingstad (SE)
(74) Representative: Norberg, Charlotte

(56) References cited:
- EP-A- 0 449 029
- EP-A- 0 466 065
- EP-A- 0 485 257
- EP-A- 1 172 285
- US-A- 1 404 419
- US-A- 5 653 466

## Description

### Technical field of the invention

The present invention relates to a load lifting vehicle, such as an industrial truck.

### Background of the invention

Load lifting vehicles, such as industrial trucks, are used for many different purposes in order to facilitate the handling and transportation of different types of goods. One frequently used type of load carrying vehicle is provided with a load lifting and lowering device placed in a front area of a vehicle body and a platform for the operator placed in an aft area of the vehicle body. In order to reduce the overall size of the vehicle is the platform pivotable around a rotational axis between an upright storage position and a substantially horizontal load carrying position. During use the platform is in the load carrying position, substantially horizontal, and the operator standing on the platform operating the vehicle from there. In order to improve the working conditions for the operator that frequently is standing on the platform is the platform resiliently secured to the vehicle body. An example of such an arrangement is disclosed in EP-A-0 485 257. Known arrangement to resiliently secure the platform does however require a considerably large space, which is a drawback since the overall size of the vehicle becomes larger. Another drawback is that they not provide a satisfactory elastic deflection, or are too weak to withstand the loads and wear that occur during frequent use. The object of the present invention is to provide a reliably resilient securing of the platform to the vehicle body that requires less space.

### Summary of the invention

The problems disclosed above are solved by the present arrangement defined in the independent claim 1 and in the independent claim 8.

The claimed load lifting vehicle comprises a vehicle body, a load lifting apparatus positioned on the front of the vehicle body and a platform for the operator pivotally mounted to one side of the vehicle body. The platform is pivotable around a rotational axis between an upright storage position and a load carrying position, and is resiliently supported in relation to the vehicle body. The platform, when in the load carrying position, is supported by at least one platform support arranged on a torsion bar axel assembly secured in the vehicle body. This arrangement requires a limited space and provides the platform with an efficient elasticity.

In a preferred embodiment of the present invention does the torsion bar axel assembly also constitute the rotational axis that the platform is pivotable around. This embodiment reduces the space required further since no separate rotational axis and thereto related components are required.

In another favourable embodiment is the torsion bar axel assembly substantially horizontal and transverse to a longitudinal direction of the lifting vehicle.

The torsion bar axel assembly has a non circular cross-section in order to facilitate the securing of the torsion bar axel assembly in the vehicle body and of the platform support on the torsion bar axel assembly in a non-rotating way.

In a further preferred embodiment does the vehicle comprise one torsion bar axel assembly secured in both ends to the vehicle body, and at least one platform support arranged somewhere along the torsion bar axel assembly. This arrangement requires few components and a reliably securing of the torsion bar axel assembly to the vehicle body.

The platform is pivotably secured to the vehicle body preferably by at least one protruding element, provided with an assembly hole, extending from the platform towards the torsion bar axel assembly. The assembly hole surrounds a bearing fitted around the torsion bar axel assembly in order to provide an arrangement that makes it possible to pivot the platform easily around the non-circular torsion bar axel assembly.

In order to provide a reliably and resistant securing of the platform to the vehicle is the platform preferably pivotably secured at two positions along the torsion bar axel assembly.

At least one platform support is arranged around the torsion bar axel assembly in such a way that it is prevented from turning around the torsion bar axel assembly, and shaped so that it provides a surface that the platform is resting on when it is in the load carrying position.

The platform and the resilient support arrangement described above could of course also be used also in other applications and are therefore not limited to the specific use described above.

### Brief description of the drawings

One embodiment of the present invention is illustrated in the appended figures, in which:
Figure 1 illustrates a schematic perspective view of a load lifting vehicle; and
Figure 2 and 3 illustrates schematic views of the arrangement according to the present invention.

### Detailed description of the invention

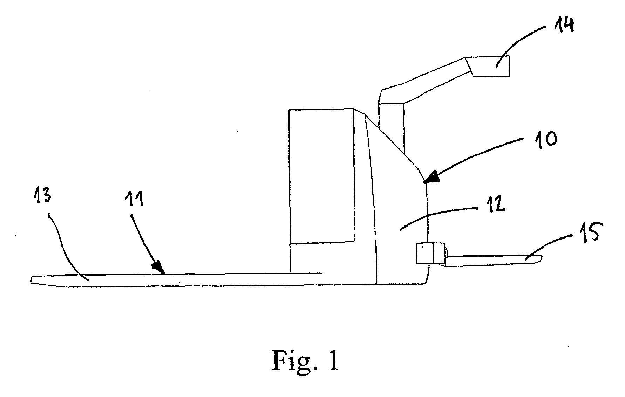

In figure 1 is a schematic side view of a lifting vehicle 10, like for example an industrial truck, disclosed. The lifting vehicle 10 comprises a load lifting apparatus 11 disposed on one side of a vehicle body 12. The lifting apparatus 11 comprises at lease one elongated lifting device 13 extending from the vehicle bode 12. A lifting vehicle operation handle 14 that is used by the operator to control the lifting apparatus and steer the lifting vehicle 10 is extending from 11 the opposite side as the lifting apparatus 11 from the vehicle body 12.

The lifting vehicle 10 further comprises a platform 15 for the operator to stand on when working with the vehicle. The platform 15 is pivotably secured to the lower part of the vehicle body 12. The platform 15 is pivotably between an upright storing position and a load carrying position in which the platform 15 is substantially horizontal.

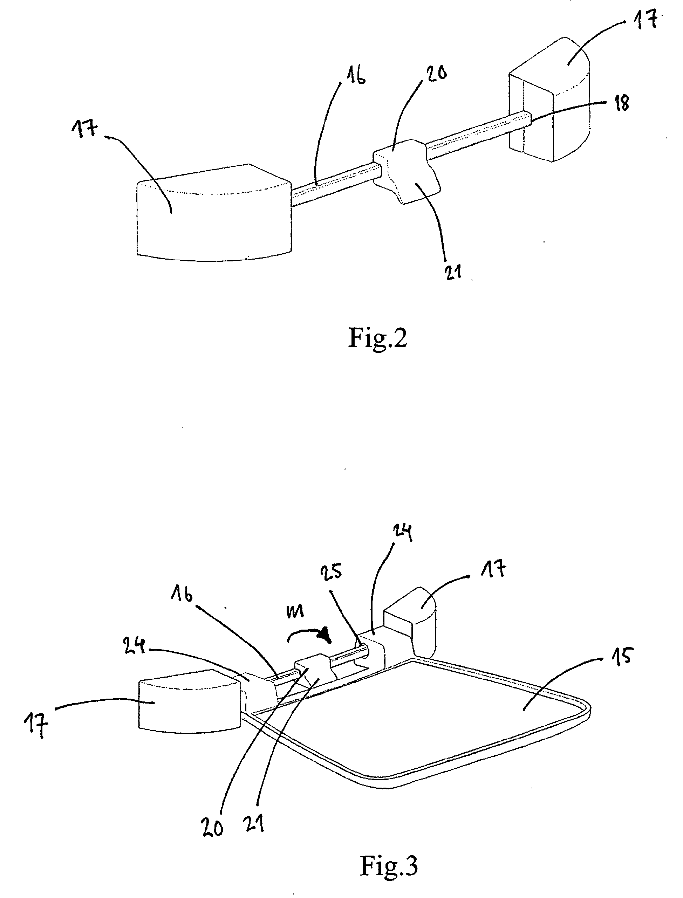

In figure 2 and 3 is the arrangement for providing the resilient support of the platform 15 disclosed. A torsion bar axel assembly 16 is secured to the vehicle body 12 (not illustrated) by one fastening element 17 placed in each end of the torsion bar axel assembly 16. The fastening elements 17 are shaped so that the surface that will be in contact with the vehicle body 12 has substantially the same shape as the contact surface on the vehicle body 12 in order to provide a reliably and stable fastening of the torsion bar axel assembly 16 to the vehicle body12. Each fastening element is provided with a recess 18, with the same cross sectional shape as the cross section of the torsion bar axel assembly 16. The torsion bar axel assembly 16 is inserted into the recess. The torsion bar axel assembly 16 has a non-circular cross section, in this embodiment a square, which ensures that the torsion bar axel assembly 16 not will turn once it is secure by the fastening elements 17. The torsion bar axel assembly 16 cross section could be shaped differently. A non-circular cross section is however preferred since it makes it easier to provide a reliably non-rotating fastening of the torsion bar axel assembly 16 on the vehicle body 12 which is essential to provide the required resilient support of the platform 15. The torsion bar axel assembly 16 is made of a spring steel material

A platform support 20 is secured around the torsion bar axel assembly 16 somewhere along the torsion bar axel assembly 16 between the fastening elements 17. The platform support is prevented from turning around the torsion bar axel assembly 16 and provided with a contact surface 21 that will be in contact with a platform contact surface when the platform 15 is in the load carrying position so that the load from the platform 15 is transformed into a torsional moment M in the bar axel assembly 16. When load is applied on the platform, the bar axel assembly 16 will act as a torsion spring and provide a resilient support to the platform 15 in relation to the vehicle body 12. The platform support 20 in the illustrated embodiment is substantially cube-shaped with a recess for the torsion bar axel assembly 16 placed close to the centre of the cube. The contact surface 21 is however slightly angled in relation to the other sides so that the contact surface 21 is facing more upwards, and becomes larger than the other surfaces. The angled surface in combination with the additional surface area provides a reliably support for the platform.

The platform support could also have other geometrical shapes as long as they provide the necessary support for the platform 15 and transfers the load from the platform into a torsional moment M in the bar axel assembly 16.

Another embodiment, still within the scope of the present invention, comprises two or more torsion bar axel assemblies that are secured in one end, alternatively both ends, to the vehicle body. Each of the torsion bar axel assemblies are provided with a platform support that will be in contact with the platform when it is in the load carrying position to transfer the loads from the platform to the torsion spring.

In one preferred embodiment the torsion bar axel assembly 16 also constitutes the rotational axle that the platform 15 is pivotably around. This is disclosed in figure 3 where the platform is provided with two protruding elements 24 extending from the platform 15 towards the torsion bar axel assembly 16. Each of the protruding elements 24 are provided with an assembly hole 25. Each assembly hole 25 surrounds a bearing (not illustrated) fitted around the torsion bar axel assembly 16 so that the platform 15 is easily pivoted around the torsion bar axel assembly 16 between the upright position and the load carrying position in which the contact surface on the platform 15 is in contact with the contact surface 21 on the platform support 20.

The number of protruding elements 24 could be increased or decreased as long as they provided a satisfactory securing of the platform 15 to the vehicle body 12.

The present invention should not be limited to the described embodiments, since these embodiments only serves as examples falling within the scope of the invention defined by the appended claims.

## Claims

1. Load lifting vehicle (10), such as an industrial truck, comprising a vehicle body (12), a load lifting apparatus (11) positioned on one side of the vehicle body (12) and a platform (15) for the operator pivotally mounted to the vehicle body (12), said platform (15) being pivotable around an rotational axis between an upright storage position and a load carrying position and is resiliently supported in relation to the vehicle body (12), **characterised in that** the platform (15), when in the load carrying position, is supported by at least one platform support (20) arranged on a torsion bar axel assembly (16) secured in the vehicle body (12) in a non-rotating way, the at least one platform support (20) is arranged around the torsion bar axel assembly (16) having a non circular cross section, in a non-rotating way.

2. Load lifting vehicle according to claim 1, **characterised in that** the torsion bar axel assembly (16) also constitutes the rotational axis that the platform (15) is pivotable around.

3. Load lifting vehicle according to claim 2, **characterised in that** the torsion bar axel assembly (16) is substantially horizontal and transverse to a longitudinal direction of the lifting vehicle (10).

4. Load lifting vehicle according to claim 1, 2, or 3, **characterised in that** it comprises one torsion bar axel assembly (16) secured in both ends to the vehicle body (12), and at least one platform support (20) arranged somewhere along the torsion bar axel assembly (16).

5. Load lifting vehicle according to any of the previous claims, **characterised in that** the platform (15) is pivotably secured to the vehicle body (12) by at least one protruding element (24), provided with an assembly hole (25), extending from the platform (15) towards the torsion bar axel assembly (16), said assembly hole (25) surrounds a bearing fitted around the torsion bar axel assembly (16).

6. Load lifting vehicle according to claim 5, **characterised in that** the platform (15) is pivotably secured at two positions along the torsion bar axel assembly (16).

7. Load lifting vehicle according to any of the previous claims, **characterised in that** the at least one platform support (20) is shaped so that it provides a contact surface (21) that the platform (15) is resting on when it is in the load carrying position.

8. Platform (15) arrangement for an industrial truck that can be pivotably secured to a vehicle body (12), comprising means for pivotably securing it to a vehicle body (12) **characterised in that** it further comprises a torsion bar axel assembly (16) having a non circular cross section, and a platform support (20) arranged around the torsion bar axel assembly (16) in a non-rotating way, the platform arrangement further comprises a surface that will be in contact with a platform support (20) in its load carrying position, the torsion bar axel assembly (16) being attachable to the vehicle body (12) in a non-rotating way in order to provide a resilient support of the platform (15) in its load carrying position.

## Patentansprüche

1. Lasthebefahrzeug (10), wie ein Flurförderer, umfassend einen Fahrzeugkörper (12), eine Lasthebeeinrichtung (11), die an einer Seite des Fahrzeugkörpers (12) positioniert ist, und eine Plattform (15) für den Bediener, die schwenkbar am Fahrzeugkörper (12) befestigt ist, wobei die Plattform (15) um eine Drehachse zwischen einer aufrechten Speicherposition und einer lasttragenden Position schwenkbar ist und in Bezug auf den Fahrzeugkörper (12) elastisch gestützt wird, **dadurch gekennzeichnet, dass** die Plattform (15), wenn sie sich in der lasttragenden Position befindet, durch zumindest eine Plattformstütze (20) gestützt wird, die an einer nicht-drehend am Fahrzeugkörper (12) gesicherten Torsionsstangenachsanordnung (16) angeordnet ist,
die zumindest eine Plattformstütze (20) um die Torsionsstangenachsanordnung (16) mit einem nichtkreisförmigen Querschnitt nicht-drehend angeordnet ist.

2. Lasthebefahrzeug gemäß Anspruch 1, **dadurch gekennzeichnet, dass** die Torsionsstangenachsanordnung (16) ebenso die Drehachse bildet, um die die Plattform (15) schwenkbar ist.

3. Lasthebefahrzeug gemäß Anspruch 2, **dadurch gekennzeichnet, dass** die Torsionsstangenachsanordnung (16) im Wesentlichen horizontal und quer zu einer Längsrichtung des Hebefahrzeugs (10) ist.

4. Lasthebefahrzeug gemäß Anspruch 1, 2 oder 3 **dadurch gekennzeichnet, dass** es eine Torsionsstangenachsanordnung (16) aufweist, die an beiden Enden am Fahrzeugkörper (12) gesichert ist, und zumindest eine Plattformstütze (20), die irgendwo entlang der Torsionsstangenachsanordnung (16) angeordnet ist.

5. Lasthebefahrzeug gemäß einem der vorangegangenen Ansprüche, **dadurch gekennzeichnet, dass** die Plattform (15) schwenkbar am Fahrzeugkörper (12) durch zumindest ein mit einer Anordnungsausnehmung (25) versehenes Vorsprungselement (24) gesichert ist, das sich von der Plattform (15) zur Torsionsstangenachsanordnung (16) erstreckt, wobei die Anordnungsausnehmung (25) eine Lagerung umgibt, die um die Torsionsstangenachsanordnung (16) eingepasst ist.

6. Lasthebefahrzeug gemäß Anspruch 5, **dadurch gekennzeichnet, dass** die Plattform (15) schwenkbar an zwei Positionen entlang der Torsionsstangenachsanordnung (16) gesichert ist.

7. Lasthebefahrzeug gemäß einem der vorangegangenen Ansprüche, **dadurch gekennzeichnet, dass** die zumindest eine Plattformstütze (20) derart gestaltet, ist dass sie eine Kontaktfläche (21) bereitstellt, auf der die Plattform (15) ruht, wenn sie sich in der lasttragenden Position befindet.

8. Plattform- (15) Anordnung für einen Flurförderer, die schenkbar an einem Fahrzeugkörper (12) gesichert werden kann, aufweisend Mittel zum schwenkbaren Sichern dieser an einem Fahrzeugkörper (12), **dadurch gekennzeichnet, dass** sie ferner eine Torsionsstangenachsanordnung (16) mit einem nichtkreisförmigen Querschnitt aufweist, und eine Plattformstütze (20), die um die Torsionsstangenachsanordnung (16) nicht-drehend angeordnet ist, wobei die Plattformanordnung ferner eine Fläche aufweist, die sich mit der Plattformstütze (20) in ihrer lasttragenden Position in Kontakt befinden wird, wobei die Torsionsstangenachsanordnung (16) nicht-drehend am Fahrzeugkörper (12) anbringbar ist, um eine elastische Stütze der Plattform (15) in ihrer lasttragenden Position bereitzustellen.

## Revendications

1. Véhicule de levage de charge (10), tel qu'un chariot de manutention, comprenant une carrosserie de véhicule (12), un appareil de levage de charge (11) positionné sur un côté de la carrosserie de véhicule (12) et une plate-forme (15) destinée à un conducteur montée de manière pivotante sur la carrosserie de véhicule (12), ladite plate-forme (15) pouvant pivoter autour d'un axe de rotation entre une position de rangement droite et une position de transport de charge, et étant supportée de manière élastique par rapport à la carrosserie de véhicule (12), **caractérisé en ce que** la plate-forme (15), lorsqu'elle se trouve dans la position de transport de charge, est supportée par au moins un support de plate-forme (20) disposé sur un ensemble d'essieu de barre de torsion (16) fixé dans la carrosserie de véhicule (12) de manière non rotative, le au moins un support de plate-forme (20) étant agencé autour de l'ensemble d'essieu de barre de torsion (16) qui présente une section transversale non circulaire, de manière non rotative.

2. Véhicule de levage de charge selon la revendication 1, **caractérisé en ce que** l'ensemble d'essieu de barre de torsion (16) constitue également l'axe de rotation autour duquel la plate-forme (15) peut tourner.

3. Véhicule de levage de charge selon la revendication 2, **caractérisé en ce que** l'ensemble d'essieu de barre de torsion (16) est sensiblement horizontal et transversal par rapport à la direction longitudinale du véhicule de levage (10).

4. Véhicule de levage de charge selon l'une quelconque des revendications 1, 2, ou 3, **caractérisé en ce qu'**il comprend un ensemble d'essieu de barre de torsion (16) fixé aux deux extrémités à la carrosserie de véhicule (12), et au moins un support de plate-forme (20) agencé quelque part le long de l'ensemble d'essieu de barre de torsion (16).

5. Véhicule de levage de charge selon l'une quelconque des revendications précédentes, **caractérisé en ce que** la plate-forme (15) est fixée de manière pivotante sur la carrosserie de véhicule (12) par au moins un élément faisant saillie (24), doté d'un trou d'assemblage (25), qui s'étend à partir de la plate-forme (15) vers l'ensemble d'essieu de barre de torsion (16), ledit trou d'assemblage (25) entourant un roulement ajusté autour de l'ensemble d'essieu de barre de torsion (16).

6. Véhicule de levage de charge selon la revendication 5, **caractérisé en ce que** la plate-forme (15) est fixée de manière pivotante au niveau de deux positions le long de l'ensemble d'essieu de barre de torsion (16).

7. Véhicule de levage de charge selon l'une quelconque des revendications précédentes, **caractérisé en ce que** le au moins un support de plate-forme (20) présente une forme destinée à fournir une surface de contact (21) sur laquelle la plate-forme (15) repose lorsqu'elle se trouve dans la position de transport de charge.

8. Agencement de plate-forme (15) d'un chariot de manutention qui peut être fixé de manière pivotante sur une carrosserie de véhicule (12), comprenant des moyens destinés à le fixer de manière pivotante sur une carrosserie de véhicule (12), **caractérisé en ce qu'**il comprend en outre un ensemble d'essieu de barre de torsion (16) présentant une section transversale non circulaire, et un support de plate-forme (20) agencé autour de l'ensemble d'essieu de barre de torsion (16) de manière non rotative, et l'agencement de plate-forme comprend en outre une surface qui est en contact avec un support de plate-forme (20) dans sa position de transport de charge, l'ensemble d'essieu de barre de torsion (16) pouvant être fixé sur la carrosserie de véhicule (12) de manière non rotative afin de fournir un support élastique de la plate-forme (15) dans sa position de transport de charge.
